# EUROPÄISCHE PATENTSCHRIFT

(11) **EP 3 961 326 B1**
(45) Veröffentlichungstag und Bekanntmachung des Hinweises auf die Patenterteilung: **27.12.2023**
(21) Anmeldenummer: 20193031.0
(22) Anmeldetag: 27.08.2020
(51) Int. Cl.: G05B 19/418

(54) **VERFAHREN UND SYSTEM ZUR OPTIMALEN HERSTELLUNG EINES PRODUKTS**
METHOD AND SYSTEM FOR OPTIMAL MANUFACTURE OF A PRODUCT
PROCÉDÉ ET SYSTÈME DE FABRICATION OPTIMALE D'UN PRODUIT

(43) Veröffentlichungstag der Anmeldung: 02.03.2022
(73) Patentinhaber: Siemens AG Österreich, 1210 Wien (AT)
(72) Erfinder: Taupe, Richard, AT / 3454 Siltzenberg-Reidling (AT); Falkner, Andreas, 1140 Wien (AT)
(74) Vertreter: Siemens Patent Attorneys

(56) Entgegenhaltungen:
- EP-A2- 2 043 022
- DE-A1-102018 110 063
- US-A1- 2007 282 480
- US-A1- 2019 137 979

## Beschreibung

Die Erfindung betrifft ein Verfahren und ein System zur optimalen Herstellung eines Produkts.

In "Cyber-Physical Production Systems" (CPPS) sollen hochindividuelle Produkte durch adaptive, selbstorganisierte technische Systeme, wie Fabriken mit Produktionsanlagen hergestellt. US 2007/282480 A1 offenbart ein solches System.

Häufig sind diese Systeme und ihre Komponenten rekonfigurierbar, das heißt deren Produktionspläne, wie Zeitpläne oder Herstellungsabfolgen, sind nicht bekannt, bevor die Produktion startet. Die Konfigurationen der jeweiligen Produktionsanlagen können sich im Laufe der Zeit zudem ändern.

Notwendige Produktionsschritte für das Produkt oder Teile davon werden dynamisch Anlagen oder Maschinen zugewiesen, die die erforderlichen Fähigkeiten zur ordnungsgemäßen Ausführung dieser Vorgänge bereitstellen. Normalerweise soll diese Zuordnung bezüglich eines bestimmten "Key Performance Indicator" (KPI), wie eine minimale Durchlaufzeit oder ein minimaler Energieverbrauch, optimal sein.

Eine traditionelle Produktion basiert häufig auf einem vordefinierten, zentralisierten Produktionsplan.

Änderns sich jedoch die Produktionsbedingungen während der angelaufenen Produktion, so fehlt heute die Fähigkeit, sich automatisch an sich ändernde Bedingungen anzupassen. CPPS sind üblicherweise dezentral organisiert, das heißt, Entscheidungen darüber, welche Operationen ausgeführt werden sollen, werden nicht von einer zentralen Instanz getroffen, sondern werden autonom und lokal nur von den beteiligten Maschinen ausgehandelt und haben daher keinen gesamten Überblick über alle beteiligten Maschinen oder Anlagen.

Es ist Aufgabe der Erfindung, eine Zuordnung von Produktionsschritten zu Maschinen auf möglichst einfache Weise dynamisch anzupassen, wenn sich produktionsspezifischen Rahmenbedingungen ändern, um weiterhin das Produkt mit einer gewünschten Qualität unter den neuen produktionsspezifischen Rahmenbedingungen produzieren zu können.

Die erfindungsgemäße Aufgabe wird durch ein Verfahren eingangs genannter Art gelöst, wobei die Herstellung des Produkts durch eine erste und eine zweite Prozesskette beschrieben werden kann, welche jeweils eine Abfolge von Produktionsschritten und zugeordnete Maschinen aus einer Menge an Produktionsmaschinen umfasst, und die Herstellung des Produkts gemäß der ersten Prozesskette durchgeführt wird, und während der Herstellung des Produkts gemäß der ersten Prozesskette eine Änderungsanforderung durch eine Konfigurationsvorrichtung erfasst wird, und die Konfigurationsvorrichtung unter Verwendung der KRR-Methode als Solver und eines dem Produkt entsprechenden Encodings und der Änderungsanforderung die zweite Prozesskette zur Herstellung des Produkts ermittelt, und dementsprechend das Produkt durch die Menge an Produktionsmaschinen herstellt wird.

Zu Lösung von Konfigurationsaufgaben sind "Knowledge Representation and Reasoning" (KRR) basierte Verfahren bekannt.

Dabei wird Wissen in Wissensbasierten Systemen formal abgebildet. Dazu sind verschiedene formale Sprachen und Notationen vorgeschlagen worden, wie "Answer Set Programming" (ASP) oder "Constraint Programming" (CP).

ASP ist ein Ansatz zur deklarativen Programmierung, basierend auf Logik Programmen evaluiert unter der sogenannten Stable Model Semantik, oder auch Answer Set Semantik. Ein Answer Set ist ein Modell des Logik Programms, und repräsentiert eine Lösung des modellierten Problems. Die deklarative Beschreibung beziehungsweise Modellierung eines Problems steht dabei im Vordergrund, und nicht etwa die algorithmische Herangehensweise, um das Problem zu lösen.

CP ist ein Paradigma zur Lösung kombinatorischer Probleme, das auf einer Vielzahl von Techniken aus der künstlichen Intelligenz, der Informatik und der Operations-Forschung beruht. Dabei geben Benutzer die Einschränkungen für die möglichen Lösungen für eine Reihe von Entscheidungsvariablen deklarativ an.

Einschränkungen unterscheiden sich von den allgemeinen Grundelementen imperativer Programmiersprachen darin, dass sie keinen Schritt oder eine Folge von auszuführenden Schritten angeben, sondern die Eigenschaften einer zu findenden Lösung. Zusätzlich zu den Einschränkungen müssen Benutzer eine Methode angeben, um diese Einschränkungen zu lösen.

Durch Anwendung von KRR wird auf eine besonders einfache Weise erreicht, dass eine beispielsweise bei einer geänderten Konfiguration der Produktionsmaschinen erneut eine optimale Produktion durch eine neue, optimale Produktionskette des Produkts ermittelt werden kann.

In einer Weiterbildung der Erfindung ist es vorgesehen, dass ASP oder CP als KRR-Methode verwendet wird.

Dadurch lässt sich auf eine einfache und effiziente Weise die Berechnung der Neukonfiguration implementieren.

In einer Weiterbildung der Erfindung ist es vorgesehen, dass die Konfigurationsvorrichtung zentral für die Menge an Produktionsmaschinen F organisiert ist.

Dadurch lässt sich auf eine einfache und effiziente Weise die Berechnung der Neukonfiguration implementieren.

In einer Weiterbildung der Erfindung ist es vorgesehen, dass die Konfigurationsvorrichtung die Änderungsanforderung aus einem Informationsfluss ableitet, welcher von der Menge an Produktionsmaschinen an die Konfigurationsvorrichtung übermittelt wird, und der Informationsfluss Daten hinsichtlich des Zustands oder von Betriebseigenschaften zumindest von Teilen der Menge an Produktionsmaschinen aufweist.

Dadurch ist es möglich, automatisch eine Änderungsanforderung automatisch aus dem Zustand oder aus Eigenschaften der Menge an Produktionsmaschinen zu ermitteln.

Die erfindungsgemäße Aufgabe wird durch ein System eingangs genannter Art erreicht, umfassend eine Menge an Produktionsmaschinen, welche dazu eingerichtet ist, das Produkt gemäß einer Prozesskette herzustellen, und eine Konfigurationsvorrichtung, welche dazu eingerichtet ist, eine Änderungsanforderung während der Herstellung des Produkts zu erfassen, und das System dazu eingerichtet ist, das Produkt durch die Menge an Produktionsmaschinen unter Berücksichtigung der Änderungsanforderung gemäß dem erfindungsgemäßen Verfahren herzustellen.

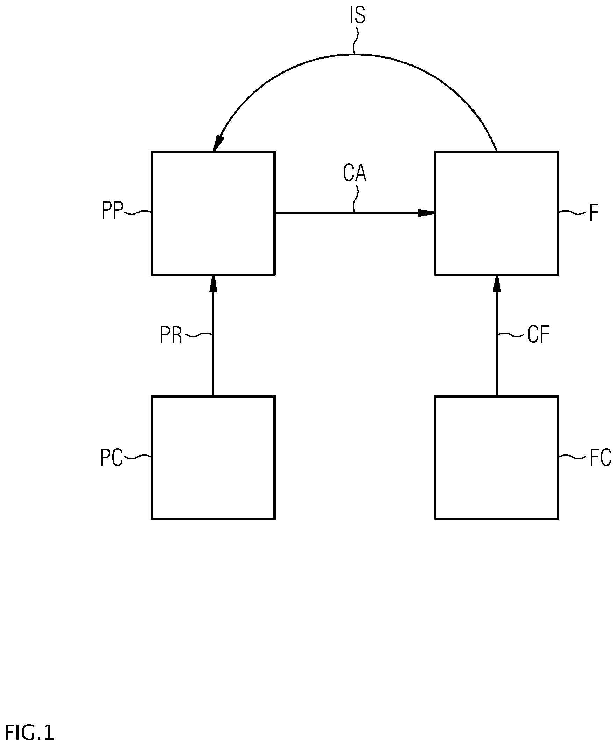

Die beiliegende Figur zeigt ein Ausführungsbeispiel der Erfindung.

Die Herstellung des Produkts kann durch eine Prozesskette beschrieben werden kann, welche jeweils eine Abfolge von Produktionsschritten und zugeordnete Maschinen aus einer Menge an Produktionsmaschinen F umfasst.

Dem entspricht eine sogenannte Produktionskonfiguration, in welcher einzelnen Produktionsschritten der Prozesskette entsprechende Maschinen zugeordnet sind.

Logistische Schritte können beispielsweise als separate Produktionsschritte oder auch als Parameter bei der Durchführung eines Produktionsschritts berücksichtigt werden.

Notwendiges Betriebsmaterial ist in den jeweiligen Produktionsschritten enthalten.

Die Herstellung des Produkts wird zunächst gemäß einer ersten optimalen Prozesskette durchgeführt, welche nach dem Stand der Technik ermittelt werden kann, beispielsweise durch Anwendung ASP.

Eine Produktionsanforderung PR initiiert eine Produktionsplanung PP, welche Informationen bezüglich des Produkts und der Menge an zur Verfügung stehenden Maschinen der Fabrik F aggregiert, sowie einen Solver für die Ermittlung einer optimalen Prozesskette zur Herstellung des Produkts bereitstellt.

Die Aggregation kann eine Komprimierung des Informationsflusses IS, welcher Daten in rascher Abfolge und großer Menge aufweisen kann, durchführen, indem beispielsweise die bekannte "stream reasoning technology", welche sich auf Inferenzansätze und Deduktionsmechanismen, die sich mit der Bereitstellung kontinuierlicher Inferenzfähigkeiten über dynamische Daten befassen, bezieht, angewandt wird.

Ferner ist eine Entscheidungskomponente umfasst, welche auf Basis des Informationsflusses IS entscheidet, wann zwischen der Ausführung der ersten und der zweiten Prozesskette gewechselt werden soll.

Während der Herstellung des Produkts gemäß der ersten Prozesskette wird eine Änderungsanforderung CA durch eine Konfigurationsvorrichtung erfasst, beispielsweise in Form eines geänderten Zuordnung eines Produktionsschrittes zu einer Maschine, falls die zuvor zugeordnete Maschine eine Störung aufweist oder eine Erweiterung der Produktionskapazität erhalten hat.

Mit anderen Worten wird die Produktionsplanung PP durch die Konfigurationsvorrichtung durchgeführt.

Eine solche Änderung CF in der Menge an Produktionsmaschinen einer Fabrik F kann beispielsweise durch eine entsprechende Änderung der Konfiguration der Fabrik FC berücksichtigt werden und mittels eines Informationsflusses IS and die Produktionsplanung PP signalisiert werden.

Die Konfigurationsvorrichtung kann die Änderungsanforderung aus dem Informationsfluss IS ableiten.

Der Informationsfluss IS wird von der Menge an Produktionsmaschinen an die Konfigurationsvorrichtung übermittelt.

Der Informationsfluss IS kann beispielsweise Daten hinsichtlich des Zustands, wie ein Fehler in der Anlage, ein Wartungszustand oder eine manuelle Unterbrechung, oder von Betriebseigenschaften, wie eine erhöhte Betriebstemperatur oder eine Produktion mit reduziertem Durchsatz, zumindest von Teilen der Menge an Produktionsmaschinen in der Fabrik aufweisen.

Die Konfigurationsvorrichtung ermittelt nun unter Verwendung der KRR-Methode als Solver und eines dem Produkt entsprechenden Encodings, sowie der Änderungsanforderung CA eine zweite optimale Prozesskette zur Herstellung des Produkts.

Dabei greift die Konfigurationsvorrichtung auf die Anwendung der KRR-Methode als Solver zurück.

Für das Produkt wird ein unter Anwendung eines entsprechenden Encodings, der Änderungsanforderung CA eine zweite, neue Prozesskette zur Herstellung des Produkts ermittelt.

Die Konfigurationsvorrichtung ist zentral für die Menge an Produktionsmaschinen F organisiert.

Anschließend wird das Produkt gemäß der zweiten Prozesskette durch die Menge an Produktionsmaschinen F herstellt.

### Bezugszeichenliste:

- CA: Änderungen betreffend der Zuordnungen der Maschinen
- CF: Änderungen betreffend die Fabrik, Menge an Maschinen
- F: Fabrik, Menge an Maschinen
- FC: Konfiguration der Fabrik
- IS: Informationsfluss
- PC: Konfiguration der Produktion
- PP: Produktionsplanung
- PR: Produktionsanforderung

## Patentansprüche

1. Verfahren zur optimalen Herstellung eines Produkts, wobei die Herstellung des Produkts durch eine erste und eine zweite Prozesskette beschrieben werden kann, welche jeweils eine Abfolge von Produktionsschritten (PC) und zugeordnete Maschinen aus einer Menge an Produktionsmaschinen (F) umfasst, und die Herstellung des Produkts gemäß der ersten Prozesskette durchgeführt wird, und während der Herstellung des Produkts gemäß der ersten Prozesskette eine Änderungsanforderung (CA) durch eine Konfigurationsvorrichtung erfasst wird, und die Konfigurationsvorrichtung unter Verwendung der KRR-Methode als Solver und eines dem Produkt entsprechenden Encodings und der Änderungsanforderung (CA) die zweite Prozesskette zur Herstellung des Produkts ermittelt, und dementsprechend das Produkt durch die Menge an Produktionsmaschinen (F) herstellt wird.

2. Verfahren nach dem vorhergehenden Anspruch, wobei "Answer Set Programming" oder "Constraint Programming" als KRR-Methode verwendet wird.

3. Verfahren nach einem der vorhergehenden Ansprüche, wobei die Konfigurationsvorrichtung zentral für die Menge an Produktionsmaschinen (F) organisiert ist.

4. Verfahren nach einem der vorhergehenden Ansprüche, wobei die Konfigurationsvorrichtung die Änderungsanforderung (CA) aus einem Informationsfluss (IS) ableitet, welcher von der Menge an Produktionsmaschinen (F) an die Konfigurationsvorrichtung übermittelt wird, und der Informationsfluss (IS) Daten hinsichtlich des Zustands oder von Betriebseigenschaften zumindest von Teilen der Menge an Produktionsmaschinen (F) aufweist.

5. System zur optimalen Herstellung eines Produkts, umfassend eine Menge an Produktionsmaschinen, welche dazu eingerichtet ist, das Produkt gemäß einer Prozesskette herzustellen, und eine Konfigurationsvorrichtung, welche dazu eingerichtet ist, eine Änderungsanforderung während der Herstellung des Produkts zu erfassen, und das System dazu eingerichtet ist, das Produkt durch die Menge an Produktionsmaschinen unter Berücksichtigung der Änderungsanforderung gemäß dem Verfahren nach einem der vorhergehenden Ansprüche herzustellen.

## Claims

1. Method for optimal manufacture of a product, wherein the manufacture of the product can be described by a first and a second process chain, which comprises in each case a sequence of production steps (PC) and assigned machines from a set of production machines (F), and the manufacture of the product is carried out in accordance with the first process chain, and during the manufacture of the product in accordance with the first process chain, a change request (CA) is detected by a configuration apparatus and using the KRR method as a solver and an encoding corresponding to the product and the change request (CA), the configuration apparatus determines the second process chain to manufacture the product and accordingly the product is manufactured by the set of production machines (F).

2. Method according to the preceding claim, wherein "Answer Set Programming" or "Constraint Programming" is used as a KRR method.

3. Method according to one of the preceding claims, wherein the configuration apparatus is organised centrally for the set of production machines (F).

4. Method according to one of the preceding claims, wherein the configuration apparatus derives the change request (CA) from a flow of information (IS) which is transmitted from the set of production machines (F) to the configuration apparatus, and the flow of information (IS) has data with respect to the state or operating properties of at least parts of the set of production machines (F).

5. System for optimal manufacture of a product, comprising a set of production machines, which is designed to manufacture the product according to a process chain, and a configuration apparatus, which is designed to detect a change request during the manufacture of the product, and the system is designed to manufacture the product by the set of production machines taking into consideration the change request in accordance with the method according to one of the preceding claims.

## Revendications

1. Procédé de fabrication optimale d'un produit, dans lequel la fabrication du produit peut être décrite par une première et une deuxième chaîne de processus, chacune comprenant une séquence d'étapes de production (PC) et des machines associées parmi un ensemble de machines de production (F), et la fabrication du produit étant effectuée selon la première chaîne de processus, et pendant la fabrication du produit selon la première chaîne de processus, une demande de changement (CA) étant saisie par un dispositif de configuration, et le dispositif de configuration, en utilisant la méthode KRR comme résolveur et un encodage correspondant au produit et à la demande de changement (CA), déterminant la deuxième chaîne de processus pour la fabrication du produit, et en conséquence, le produit étant fabriqué par l'ensemble de machines de production (F).

2. Procédé selon la revendication précédente, dans lequel le « Answer Set Programming » ou « Constraint Programming » est utilisé comme méthode KRR.

3. Procédé selon l'une des revendications précédentes, dans lequel le dispositif de configuration est organisé de manière centrale pour l'ensemble des machines de production (F).

4. Procédé selon l'une quelconque des revendications précédentes, dans lequel le dispositif de configuration dérive la demande de changement (CA) d'un flux d'informations (IS) transmis par l'ensemble de machines de production (F) au dispositif de configuration, et le flux d'informations (IS) comprend des données concernant l'état ou des caractéristiques de fonctionnement d'au moins des parties de l'ensemble de machines de production (F).

5. Système pour la fabrication optimale d'un produit, comprenant un ensemble de machines de production agencées pour fabriquer le produit selon une chaîne de processus, et un dispositif de configuration agencé pour détecter une demande de changement pendant la fabrication du produit, et le système étant agencé pour fabriquer le produit par l'ensemble de machines de production en tenant compte de la demande de changement selon le procédé selon l'une quelconque des revendications précédentes.
